# EUROPÄISCHE PATENTSCHRIFT

(11) **EP 1 431 090 B1**
(45) Veröffentlichungstag und Bekanntmachung des Hinweises auf die Patenterteilung: **21.03.2007**
(21) Anmeldenummer: 03026204.2
(22) Anmeldetag: 14.11.2003
(51) Int. Cl.: B60H 3/06

(54) **Filtereinrichtung und Filterelement**
Filtering device and filter element
Dispositif de filtration et élément filtrant

(30) Priorität: 17.12.2002 DE 10259202
(43) Veröffentlichungstag der Anmeldung: 23.06.2004
(73) Patentinhaber: Behr GmbH & Co. KG, 70469 Stuttgart (DE); helsa-automotive GmbH & Co. KG, 95482 Gefrees (DE)
(72) Erfinder: Boschert, Björn, 71254 Ditzingen (DE); Busse, Gabriele, 93561 Ködnitz/Fölschnitz (DE); Keibel, Thorsten, 95213 Münchberg (DE); Schmitz, Jochen, 71229 Leonberg (DE)
(74) Vertreter: Grauel, Andreas

(56) Entgegenhaltungen:
- DE-A1- 3 439 255
- DE-A1- 19 746 804
- FR-A- 2 741 568

## Beschreibung

Die vorliegende Erfindung betrifft eine Filtereinrichtung sowie ein Filterelement, wie es insbesondere bei Filtereinrichtungen Verwendung findet. Das Verwendungsgebiet erfindungsgemäßer Filtereinrichtungen sowie Filterelemente ist insbesondere im Bereich des Fahrzeugbaus, insbesondere des Kraftfahrzeugbaus. Dabei können erfindungsgemäße Filtereinrichtungen und Filterelemente vorzugsweise als Luftfilter, wie beispielsweise Innenraumluftfilter dienen.

Es ist bekannt Filtereinrichtungen, wie Innenraumluftfilter für Kraftfahrzeuge, dadurch zu bilden, dass ein Filterelement in ein Filtergehäuse eingesetzt wird. Es sind hierbei sowohl Filterelemente bekannt, die einen Filterrahmen aufweisen, als auch solche, die keinen gesonderten, eigensteifen Filterrahmen aufweisen. Die Filterelemente werden in das Filtergehäuse eingesetzt, wobei zwischen Filterelement und Filtergehäuse eine möglichst hochwertige Kontaktierung hergestellt wird, damit das durchströmende mit Filtergut beladene Fluid nicht in einem so genannten Neben- oder Leckagestrom am Filterelement vorbeiströmt. Dies hätte zur Folge, dass die Filterleistung reduziert wird und auch noch stromabwärts der Filtereinrichtung eine Filtergutfracht mit dem Fluidstrom mitgeführt wird.

Aus der FR 2 741 568 A1 ist ein, in einen Kanal einschiebbarer Filtereinsatz bekannt, welcher im Einschubbereich der Kanalwand mit einer Dichtlippe ausgeführt ist. Ebenso weist der Filtereinsatz ein Dichtelement an der dem Einschubbereich gegenüberliegenden Kanalwand auf. Der Filter ist im eingebauten Zustand gegen die entsprechenden Kanalwände somit abgedichtet.

Weiter sind Filterelemente bekannt, die aus einem Filtermedium, wie einem Papier oder Vlies bestehen, das als flächiges Material ausgebildet ist. Das Filtermedium wird zur Oberflächenvergrößerung v-förmig gefaltet. Um ein im Wesentlichen eigensteifes Filterelement zu erhalten ist an wenigstens einem Teil der Seiten des Filterelements ein Randstreifen aufgeklebt, der senkrecht zum Verlauf der Filterebene, die durch das Filtermedium definiert wird, ausgerichtet ist. Dieser Randstreifen wird insbesondere aus Filtermedium hergestellt. Die Klebeverbindung zwischen Filtermedium und Randstreifen ist fluiddicht. Andererseits ist der Randstreifen an sich nicht geeignet, ein Dichtelement auszubilden.

Es ist jedoch bekannt, einen solchen Randstreifen so zu gestalten, dass er gleichzeitig eine Dichtfunktion erfüllen kann. Diese Dichtfunktion wird dadurch erreicht, dass der Randstreifen über die Filterebene hinausreicht und als Dichtlasche dient. Die Dichtlasche ist Teil des Randstreifens und kann durch eine vorgegebene Sollknickstelle zum restlichen Randstreifen hin begrenzt sein. Die Dichtlasche ist so ausgebildet, dass sie in der Einbaulage des Filterelements an einer entsprechenden Dichtfläche des Filtergehäuses anliegt, wobei sie in der Regel aus der Ebene des restlichen Randstreifens ausgelenkt ist. Auch eine klemmende Halterung des Dichtstreifens ist realisierbar, wobei der Dichtstreifen dann einerseits am Filtergehäuse und andererseits von einem Filterrahmen oder wiederum vom Filtergehäuse gehalten ist. Im Falle der losen Anlage des Dichtstreifens an einer Dichtfläche ist die Anströmrichtung der Dichtlasche durch das Medium so gewählt, dass die Anströmung eine kraftbeaufschlagte Anlage der Dichtlasche am Dichtstreifen zur Folge hat.

Bei einer klemmenden Halterung der Dichtlasche kann es durch Fertigungstoleranzen und Kompressibilität des Materials der Dichtlasche dazu kommen, dass keine hinreichende Klemmung über die Standzeit des Filterelements gewährleistet ist. Bei einer rein durch Elastizität und Anströmung erzeugten Anlage kann die Kraftbeaufschlagung insbesondere bei geringen Volumenströmen des Medium nicht ausreichend sein. In diesen Fällen kann es zu unerwünschten Leckageströmungen kommen.

Aufgabe der Erfindung ist es das Auftreten von derartigen Leckageströmungen zu verhindern.

Diese Aufgabe wird durch ein erfindungsgemäß durch eine Filtereinrichtung sowie durch ein Filterelement gemäß den unabhängigen Ansprüchen gelöst.

Die Filtereinrichtunge weist ein Filtergehäuse auf, in welches ein Filterelement eingesetzt ist. Das Filtergehäuse weist eine Anlagefläche auf, an der eine am Filterelement ausgebildete Dichtlasche dichtend anliegt. Die Dichtlasche erstreckt sich wenigstens längs einer Kante des Filterelements und ragt über eine durch das Filterelement definierte Filterebene ab. Die Dichtlasche wird zum Filterelement hin durch eine Sollknickstelle begrenzt, wobei beim Einsetzen des Filterelements in das Filtergehäuse ein Abknicken der Dichtlasche aus ihrer Erstreckungsebene heraus entlang der Sollknickstelle erfolgt. Gemäß der Erfindung ist im Bereich der Sollknickstelle eine Versteifung vorgesehen.

Durch die Versteifung wird die Kraft, mit der dem Auslenken aus der ursprünglichen Lage heraus erschwert. Eine diesem Auslenken entgegengebrachte Kraft wird erzeugt. Hierdurch wird eine dauerhaft gute Anlage an der Anlagefläche und somit eine zuverlässige Dichtfunktion erreicht. Darüber hinaus ist ein zusätzlicher Vorteil der Erfindung darin zu sehen, dass ein undefiniertes Abknicken der Dichtlasche beim Einsetzen in das Filterelement vermieden wird. Ein solches undefiniertes, meist unbeabsichtigtes Abknikken kann zu fehlerhafter Anlage der Dichtlasche an der Dichtfläche führen, so dass eine Leckageströmung auftreten kann.

Ein weiterer Vorteil der Erfindung ist darin zu sehen, dass neben der Vermeidung von Leckageströmungen auch eine besser definierte Lagebeziehung zwischen Dichtlasche und Randstreifen geschaffen wird.

Die Versteifung der Dichtlasche wird im Bereich der Sollknickstelle durch einen Materialauftrag gebildet. Das Aufbringen eines Materialauftrags im Bereich der Sollknickstelle ist eine einfache Möglichkeit, eine Versteifung zu erzeugen. Dabei wird ein nach dem Auftragen auf die Dichtlasche aushärtendes Material verwendet. Bei dem Material kann es sich insbesondere um Materialien auf Harz- oder Klebstoffbasis handeln, insbesondere um so genannte Heißkleber.

Eine vorteilhafte Ausgestaltung der Erfindung sieht vor, dass die Versteifung wenigstens teilelastisch verformbar ist. Die teilelastische Verformbarkeit verbessert zum einen die Anlage der Dichtlasche an der Dichtkante auch bei Schwingungsanregungen. Darüber hinaus ermöglicht die teilelastische Verformbarkeit darüber hinaus in einfacher Weise, die Sollknickstelle nicht so weit zu versteifen, dass ihre Funktion als definierte Knickstelle verloren geht. In einfacher Weise bleibt gewährleistet, dass insbesondere zu Beginn der Verformung die Knickkraft im Bereich der Sollknickstelle geringer ist, als im Bereich der Dichtlasche oder des Filterelements.

Gemäß bevorzugter Ausgestaltung der Filtereinrichtung ist die Dichtlasche Bestandteil eines das Filterelement wenigstens entlang einer Seitenkante umschließenden Randstreifens. Solche Randstreifen werden bei Filterelementen zum Erzeugen einer definierten Form und Filterebene verwendet, wobei der Randstreifen direkt mit dem Filtermedium verbunden wird. Dabei ist die Knickstelle gemäß vorteilhafter Ausgestaltung als Materialschwächung im Randstreifen ausgebildet. Die Materialschwächung kann beispielsweise durch einen Einschnitt oder eine Einkerbung in das Material des Randstreifens herbeigeführt werden.

Ein Filterelement weist ein durchströmbares Filtermedium auf. Dabei ist das Filterelement an wenigstens einer Seite lateral durch einen senkrecht zur durch das Filtermedium definierten Filterebene ausgerichteten Randstreifen begrenzt. Eine Dichtlasche ist Bestandteil des Randstreifens ist. Sie ragt über die Filterebene hinaus und wird durch den Verlauf einer Sollknickstelle gegenüber dem restlichen Randstreifen abgegrenzt. Gemäß der Erfindung ist im Bereich der Sollknickstelle eine Versteifung ausgebildet.

Die Versteifung der Dichtlasche ist im Bereich der Sollknickstelle durch einen Materialauftrag auf die Dichtlasche selbst gebildet. Dabei handelt es sich bei dem Materialauftrag um einen Auftrag aus aushärtendem Material, wie einem Harz, Klebstoff oder dgl. Die Versteifung ist gemäß bevorzugter Ausgestaltung wenigstens teilelastisch verformbar ausgebildet.

Gemäß weiterer vorteilhafter Ausgestaltung der Filtereinrichtung ist der Randstreifen an dem Filterelement angeklebt und der Materialauftrag für die Versteifung aus dem Klebstoff ist, der zum Befestigen des Randstreifens an dem Filtermedium dient. Hierbei ist in besonders vorteilhafter Weise auf der dem Filtermedium zugewandten Seite des Randstreifens eine auch den Materialauftrag bildende durchgehende Klebstoffschicht ausgebildet.

Vorteilhafte Ausgestaltungen der Filtereinrichtung sehen vor, dass die Sollknickstelle als Materialschwächung im Randstreifen ausgebildet ist. Die Schwächung ist insbesondere als Einkerbung oder Einschnitt ausgebildet. Auch durch Prägen des Materials des Randstreifens kann eine Sollknickstelle herbeigeführt werden.

Gemäß vorteilhafter Ausführungsbeispiele der Erfindung kann die Beschichtung bzw. Verstärkung der Dichtlasche einseitig oder beidseitig erfolgen. Auch kann die Beschichtung über die Höhe der Dichtlasche vollständig erfolgen oder nur über einen Teil der Höhe der Dichtlasche.

Die Erfindung ist im Übrigen auch anhand der in der Zeichnung schematisch dargestellten Ausführungsbeispiele näher erläutert und wird im Folgenden unter Bezugnahme auf die Zeichnung ausführlich beschrieben; dabei zeigt:
- Figur 1: eine schematische Teilansicht eines erfindungsgemäßen Filterelements;
- Figur 1a: eine Schnittdarstellung eines Randstreifens mit Klebstoffauftrag vor dem Befestigen am Filtermedium
- Figur 2: in schematischer Darstellung ein Filterelement Montageendlage im Filtergehäuse; und
- Figur 3: ein erfindungsgemäß ausgebildetes Filterelement mit klemmend gehaltener Dichtlasche.

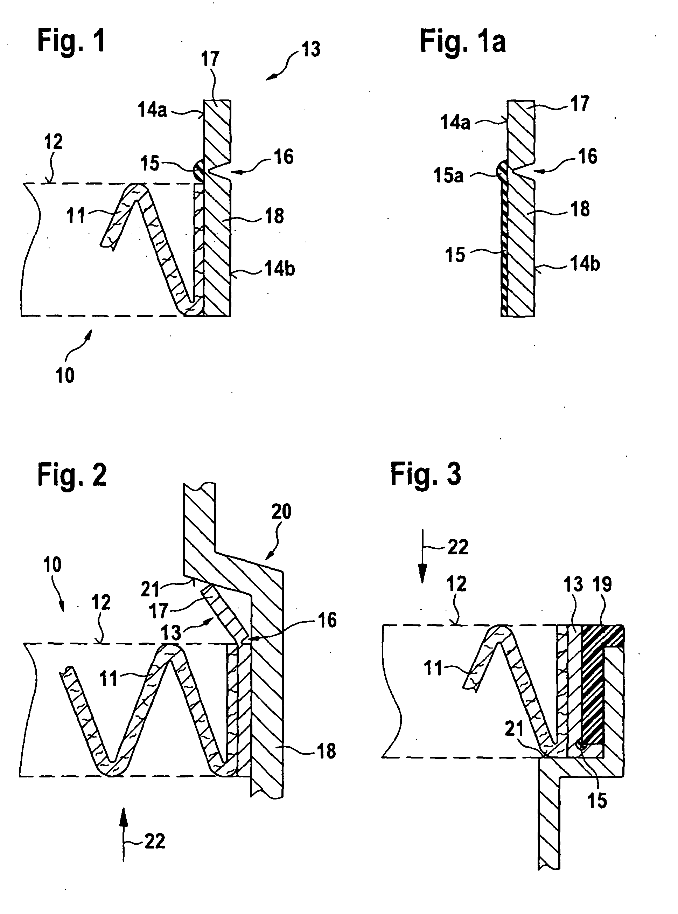

Die Figuren 1, 2 und 3 zeigen jeweils in schematischer und auszugsweiser Darstellung ein erfindungsgemäßes Filterelement 10. Das Filterelement 10 wird im Wesentlichen aus dem Filtermedium 11 gebildet, das die Filterebene 12 definiert und in v-förmige Zieharmonikafaltung gelegt ist, damit die Oberfläche des Filterelements vergrößert wird. Das Filterelement wird an wenigstens einer Seite durch einen Randstreifen 13 begrenzt, der Senkrecht zur Filterebene 12 ausgerichtet ist. Der Randstreifen 13 ist mit dem gefalteten Filtermedium 11 unlösbar verbunden. Die unlösbare Verbindung ist insbesondere durch Verkleben hergestellt. Hierzu wird auf der dem später dem Filtermedium zugewandten Seite 14a des Randstreifens 13 eine Kleberaupe 15 aufgetragen. Auf der dem Filtermedium abgewandten Seite 14b des Filterelements ist der Einschnitt als Sollknickstelle 16 in den Randstreifen 13 eingebracht, der die Dichtlasche 17 vom Rest 18 des Randstreifens 13 trennt.

Die Figur 1 a zeigt die Darstellung des Randstreifens 23 der Figur 1 vor dem Befestigen an dem Filtermedium 11. Der Randstreifen weist den Einschnitt 16 auf, der im dargestellten Beispiel als Einkerbung ausgebildet ist. Andere Ausführungsformen sehen vor, dass ein einfacher Einschnitt oder aber eine Falzlinie eingebracht ist. Durch diese Sollknickstelle 16 wird die Dichtlasche 17 vom Rest 18 des Randstreifens abgegrenzt. Auf der dem Einschnitt 16 abgewandten Seite 14a des Randstreifens ist eine Kleberaupe 15, beispielsweise eines Heißklebers aufgebracht. Das Aufbringen des Klebers auf dem Randstreifen fördert das Eindringen des Klebstoffes in das Filtermedium und kann in diesem Bereich auch geeignet sein, eine fluiddichte Verbindung zwischen Filtermedium und Randstreifen herzustellen. In dem dem Einschnitt gegenüberliegenden Bereich weist die Kleberaupe eine Verdikkung 15a auf, die eine mechanische Verstärkung des Materials in diesem Bereich zur Folge hat. Gleichzeitig weist die Klebstoffmasse eine gewisse elastische Verformbarkeit auf. Diese elastische Verformbarkeit der Klebstoffmasse wirkt dem Abknicken der Dichtlasche 17 entlang der Sollknickstelle 16 entgegen. Auf diese Weise wird auch unter Schwingungsbelastung eine dauerhaft elastische kraftbeaufschlagte Anlage der Dichtlasche 17 an eine Dichtfläche 21, bei denen es sich auch um eine entsprechende Anlagekante handeln kann, welche die Dichtlasche aus ihrer in Figur 1 und 1 a gezeigten Ausgangslage auslenkt, gewährleistet.

Die Figur 2 zeigt die schematische Darstellung der Montageendlage des Filterelements 10 in dem Filtergehäuse 20 einer Filtereinrichtung. Das Filterelement 10 ist in das Filtergehäuse 20 eingesetzt. Die Dichtlasche 17 stößt dabei an der Dichtfläche 21 an und wird aus seiner in Figur 1 dargestellten Ausgangslage ausgelenkt. Sie liegt kraftbeaufschlagt dichtend an der Anlagefläche 21 an. Die Kraftbeaufschlagung erfolgt einerseits durch die Präsenz des Materials der Kleberaupe 15 und andererseits durch die wenigstens teilweise elastische Verformung der Kleberaupe 15. Andererseits wird beim Durchströmen des Filterelements 10 in Richtung des Strömugspfeils 22 ein Anpressdruck auf die Dichtlasche 17 erzeugt.

Die Figur 3 zeit eine schematische Darstellung, bei der das Filterelement 10 in einem Filterrahmen 19 gehalten ist. Der Filterrahmen 19 wird im Filtergehäuse 20 in Richtung auf die Anlagefläche 21 hin kraftbeaufschlagt angedrückt. Beim Einsetzen des Filterrahmens gerät die Dichtlasche 17 des Randstreifens 13 zwischen den Filterrahmen 19 und die Anlagefläche und wird klemmend dazwischen gehalten. Aufgrund von Fertigungstoleranzen kann die klemmende Anlage lokal gestört sein. Nicht nur aber vor allem in diesen Bereichen sorgt die Kleberaupe 15 dafür, dass eine sichere Anlage der Dichtlasche 17 an die Dichtfläche 21. Die zu bevorzugende Anströmrichtung ist durch den Strömungspfeil 22 dargestellt.

## Patentansprüche

1. Filtereinrichtung mit Filtergehäuse, in welches ein Filterelement eingesetzt ist, wobei
das Filtergehäuse wenigstens eine Anlagefläche aufweist, an der eine am Filterelement ausgebildete Dichtlasche dichtend anliegt,
das Filterelement an wenigstens einer seiner Kanten eine über die Filterebene des Filterelements hinaus abragende Dichtlasche zur dichtenden Anlage an der Anlagefläche aufweist,
wobei die Dichtlasche durch eine Sollknickstelle zum Filterelement hin begrenzt ist, wobei beim Einsetzen des Filterelements in das Filtergehäuse ein Abknicken der Dichtlasche aus ihrer Erstreckungsebene heraus entlang der Sollknickstelle erfolgt und
die Dichtlasche (17) im Bereich der Sollknickstelle (16) eine Versteifung (15) aufweist,
**dadurch gekennzeichnet, dass** die Versteifung (15) durch einen Materialauftrag auf die Dichtlasche (17) selbst gebildet ist, wobei der Materialauftrag aus einem nach dem Aufbringen auf die Dichtlasche (17) aushärtenden Material besteht.

2. Filtereinrichtung nach Anspruch 1, **dadurch gekennzeichnet, dass** der Materialauftrag aus einem Harz und/oder Klebstoff besteht.

3. Filtereinrichtung nach einem der vorhergehenden Ansprüche, **dadurch gekennzeichnet, dass** die Versteifung (15) wenigstens teilelastisch verformbar ist.

4. Filtereinrichtung nach einem der vorhergehenden Ansprüche, **dadurch gekennzeichnet, dass** die Dichtlasche (17) Teil eines das Filterelement (10) wenigstens entlang einer Seitenkante umschließenden Randstreifens (13) ist.

5. Filtereinrichtung nach Anspruch 4, **dadurch gekennzeichnet, dass** die Sollknickstelle (16) als Materialschwächung im Randstreifen (13) ausgebildet ist.

6. Filterelement mit einem durchströmbaren Filtermedium, wobei das Filterelement an wenigstens einer Seite lateral durch einen senkrecht zur Filterebene ausgerichteten Randstreifen begrenzt wird, wobei eine Dichtlasche Teil des Randstreifens ist, welche über die Filterebene hinausragt und durch den Verlauf einer Sollknickstelle definiert wird,
wobei im Bereich der Sollknickstelle (16) eine Versteifung (15) ausgebildet ist, **dadurch gekennzeichnet dass** die Versteifung der Dichtlasche (17) durch einen Materialauftrag auf die Dichtlasche (17) selbst gebildet ist, wobei der Materialauftrag aus einem nach dem Aufbringen auf die Dichtlasche (17) aushärtenden Material besteht.

7. Filterelement nach Anspruch 6, **dadurch gekennzeichnet, dass** der Materialauftrag aus einem Harz und/oder Klebstoff besteht.

8. Filterelement nach einem der Ansprüche 6 bis 7, **dadurch gekennzeichnet, dass** die Versteifung (15) wenigstens teilelastisch verformbar ist.

9. Filterelement nach einem der Ansprüche 6 bis 8, **dadurch gekennzeichnet, dass** der Randstreifen (13) an dem Filtermedium (11) angeklebt ist und der Materialauftrag aus dem Klebstoff ist, der zum Befestigen des Randstreifens (13) an dem Filtermedium (11) dient.

10. Filterelement nach Anspruch 9, **dadurch gekennzeichnet, dass** auf der dem Filtermedium (11) zugewandten Seite des Randstreifens (13) eine auch den Materialauftrag bildende durchgehende Klebstoffschicht (15) ausgebildet ist.

11. Filterelement nach Anspruch 10, **dadurch gekennzeichnet, dass** die Klebstoffschicht (15) im Bereich der Sollknickstelle (16) eine Verdickung (15a) aufweist.

12. Filterelement nach einem der Ansprüche 6 bis 11, **dadurch gekennzeichnet, dass** die Sollknickstelle (16) als Materialschwächung im Randstreifen ausgebildet ist.

13. Filterelement nach Anspruch 12, **dadurch gekennzeichnet, dass** die Sollknickstelle (16) als Einschnitt oder Einkerbung im Material des Randstreifens ausgebildet ist.

## Claims

1. A filtering device with filter housing in which a filter element is inserted,
- the filter housing having at least one contact surface on which lies a sealing strip formed on the filter element in such a manner that a seal is formed,
- the filter element having on at least one of its edges a sealing strip which projects beyond the filter plane of the filter element to provide a sealing contact with the contact surface,
- the sealing strip being bounded by a predetermined bending point on the filter element side, when the filter element is inserted into the filter housing the sealing strip bending out of its longitudinal plane along said predetermined bending point,
- the sealing strip (17) having a reinforcement (15) in the area of the predetermined bending point (16),
**characterised in that**
the reinforcement (15) is formed by a layer of material on the sealing strip (17) itself, the material layer consisting of material which hardens after it is applied to the sealing strip (17).

2. A filtering device in accordance with claim 1,
**characterised in that**
the material layer consists of resin and/or adhesive.

3. A filtering device in accordance with one of the preceding claims,
**characterised in that**
the reinforcement (15) is at least partially elastically ductile.

4. A filtering device in accordance with one of the preceding claims,
**characterised in that**
the sealing strip (17) is part of an edge strip (13) which encloses the filter element (10) along at least one side.

5. A filtering device in accordance with claim 4,
**characterised in that**
the predetermined bending point (16) take the form of a weakened area in the edge strip (13).

6. A filter element having a filter medium through a flow is possible, the filter element being bounded laterally on at least one side by an edge strip oriented perpendicular to the filter plane, a sealing strip forming part of the edge strip extending beyond the filter plane and being defined by the course of a predetermined bending point, a reinforcement (15) being formed in the area of the predetermined bending point (16),
**characterised in that**
the reinforcement on the sealing strip (17) is formed by a layer of material on the sealing strip (17) itself, the material layer consisting of a material which hardens after it is applied to the sealing strip (17).

7. A filter element in accordance with claim 6,
**characterised in that**
the material layer is made of a resin and/or an adhesive.

8. A filter element in accordance with one of claims 6 to 7,
**characterised in that**
the reinforcement (15) is at least partially elastically ductile.

9. A filter element in accordance with one of claims 6 to 8,
**characterised in that**
the edge strip (13) is fixed by adhesive to the filter medium (11) and the material layer consists of the adhesive which is used to fix the edge strip (13) to the filter medium (11).

10. A filter element in accordance with claim 9,
**characterised in that**
formed on the side of the edge strip (13) facing the filter medium (11) is a continuous adhesive layer (15) which also forms the layer of material.

11. A filter element in accordance with claim 10,
**characterised in that**
layer of adhesive (15) has a thicker section in the area of the predetermined bending point (16).

12. A filter element in accordance with one of claims 6 to 11,
**characterised in that**
the predetermined bending point (16) takes the form of a weakened area in the material of the edge strip.

13. A filter element in accordance with claim 12,
**characterised in that**
the predetermined bending point (16) is designed as a cut-in or notch in the material of the edge strip.

## Revendications

1. Dispositif de filtration comprenant un carter de filtre dans lequel est introduit un élément filtrant, où
- le carter de filtre présente au moins une surface d'appui sur laquelle s'applique, de façon étanche, un couvre joint d'étanchéité configuré sur l'élément filtrant,
- l'élément filtrant présente, sur au moins l'un de ses bords, un couvre-joint d'étanchéité servant à s'appliquer de façon étanche sur la surface d'appui, ledit couvre-joint d'étanchéité dépassant du plan de filtre de l'élément filtrant,
où le couvre-joint d'étanchéité est délimité, en direction de l'élément filtrant, par un point de flexion théorique où, lors de l'introduction de l'élément filtrant dans le carter de filtre, il se produit, le long du point de flexion théorique, un pliage du couvre-joint d'étanchéité sortant de son plan d'étendue, et
- le couvre-joint d'étanchéité (17) présente un renfort (15) dans la zone du point de flexion théorique (16),
**caractérisé en ce que** le renfort (15) est formé par une application de matière sur le couvre-joint d'étanchéité (17) lui-même, où la matière appliquée se compose d'une matière durcissant après l'application sur le couvre-joint d'étanchéité (17).

2. Dispositif de filtration selon la revendication 1, **caractérisé en ce que** la matière appliquée se compose d'une résine et/ou d'une colle.

3. Dispositif de filtration selon l'une ou l'autre des revendications précédentes, **caractérisé en ce que** le renfort (15) est déformable au moins de façon partiellement élastique.

4. Dispositif de filtration selon l'une quelconque des revendications précédentes, **caractérisé en ce que** le couvre-joint d'étanchéité (17) fait partie d'une bande de bordure (13) entourant l'élément filtrant (10) au moins le long d'un bord latéral.

5. Dispositif de filtration selon la revendication 4, **caractérisé en ce que** le point de flexion théorique (16) est configuré comme un affaiblissement de la matière dans la bande de bordure (13).

6. Élément filtrant comprenant un milieu de filtration pouvant traverser, où l'élément filtrant est délimité latéralement, sur au moins un côté, par une bande de bordure orientée verticalement par rapport au plan du filtre, où un couvre-joint d'étanchéité fait partie de la bande de bordure, couvre-joint d'étanchéité qui dépasse du plan du joint et est défini par le profil d'un point de flexion théorique, où un renfort (15) est configuré dans la zone du point de flexion théorique (16), **caractérisé en ce que** le renfort du couvre-joint d'étanchéité (17) est formé par une application de matière sur le couvre-joint d'étanchéité (17) lui-même, où la matière appliquée se compose d'une matière durcissant après l'application sur le couvre-joint d'étanchéité (17).

7. Élément filtrant selon la revendication 6, **caractérisé en ce que** la matière appliquée se compose d'une résine et/ou d'une colle.

8. Élément filtrant selon l'une ou l'autre des revendications 6 et 7, **caractérisé en ce que** le renfort (15) est déformable au moins de façon partiellement élastique.

9. Élément filtrant selon l'une quelconque des revendications 6 à 8, **caractérisé en ce que** la bande de bordure (13) est collée sur le milieu de filtration (11), et la matière appliquée est de la colle qui sert à fixer la bande de bordure (13) sur le milieu de filtration (11).

10. Élément filtrant selon la revendication 9, **caractérisé en ce qu'**une couche de colle continue (15), formant également l'application de matière, est configurée sur le côté de la bande de bordure (13), tourné vers le milieu de filtration (11).

11. Élément filtrant selon la revendication 10, **caractérisé en ce que** la couche de colle (15) présente un épaississement (15a) dans la zone du point de flexion théorique (16).

12. Élément filtrant selon l'une quelconque des revendications 6 à 11, **caractérisé en ce que** le point de flexion théorique (16) est configuré comme un affaiblissement de la matière dans la bande de bordure.

13. Élément filtrant selon la revendication 12, **caractérisé en ce que** le point de flexion théorique (16) est configuré comme une encoche ou une entaille dans la matière de la bande de bordure.
